# EUROPEAN PATENT APPLICATION

(11) **EP 4 417 326 A1**
(43) Date of publication of application: **21.08.2024**
(21) Application number: 23157002.9
(22) Date of filing: 16.02.2023
(51) Int. Cl.: B07B 1/46, F16B 1/00

(54) **SPOT MAGNETIC FIXING FOR MODULAR SCREENING MEDIA**

(71) Applicant: Schenck Process Australia Pty Limited, Beresfield NSW 2322 (AU)
(72) Inventor: Johnstone, Aidan, Melbourne (AU)
(74) Representative: Sandvik

(57) **Abstract**

A coupling element (10) for coupling a screening member (12) releasably to a support member (13) in a screening deck (60) used in a material vibrational screening apparatus, the coupling element (10) having a first part (17) with a first zone (18) configured to engage with the screening member (12) with magnetic attraction forces acting to releasably hold the screening member (12) to the coupling element (10), the first part (17) having an oppositely facing second zone (19) configured to engage with the support member (13) with magnetic attraction forces releasably holding the coupling element (10) to the support member (13), the coupling element (10) further having a second part (21, 41) connected to and extending axially downwardly from the first part (17) to engage with the support member (13) to prevent relative movement laterally to the axial direction but not inhibit relative moment in the axial direction.

## Description

### Field of the Disclosure

The present disclosure relates to improved releasable coupling elements for holding, in a removable manner, a screening panel or a screening panel module, to a substrate support structure to form a screening deck usable in vibrational material screening apparatus.

### Background of the Disclosure

Screening apparatus is used commonly in mining and quarrying industries to break up earth-based materials such as rock and ore materials and to process particles of such materials into particular size ranges. Vibrational material screening apparatus can be used in other industries for comparable uses and the present development is applicable to all such vibrational material screening apparatus. Vibrational screening apparatus will include at least one screening deck and commonly multiple screening decks disposed in a stacked formation with limited space between screening decks to limit the overall height of the vibrational material screening apparatus. Each screening deck will typically include at least one screening panel structure supported on and secured by releasable coupling elements to a substrate support structure. In use, each screening deck is caused to vibrate by at least one and commonly multiple vibration imposing exciter devices or machines, details of which are well known in the relevant industries where vibrational material screening apparatus is used and are not further described in this disclosure. In use, material to be processed by vibrational material screening apparatus is deposited onto an upwardly facing surface of the screening panel structure or an uppermost screening panel structure if multiple screening decks are provided in a stacked configuration. The screening deck is vibrated to assist with processing and passing material of a certain size range through screening apertures, if included in the screening deck, to be either further processed on a further screening deck located below the first screening deck, or to be collected in a collection zone. Particle material that is not passed through screening apertures, either because they are not provided, or if the particle sizes are too large, are moved by the imposed vibration regime along the screening deck, and by the orientation of the screening deck, to be dropped from an edge region. Such material is typically collected as the end product or for further processing.

Screening panel structures wear during use and from time to time need to be replaced. Further wear patterns can be variable across screening decks such that zones of a screen deck might be acceptable for further use where other zones might not be satisfactory for further use. Over recent years, screening decks have been developed utilising relatively small screen panel modules having a square or rectangular perimeter that are each secured to the substrate support structure, typically by two (or more) spaced individual releasable coupling elements positioned along at least two opposed edge zones of each screen panel module, whereby the screen panel modules are positioned in edge engagement arrays to provide together a complete screening deck surface. This arrangement allows for individual worn screen panel modules to be removed and replaced without necessarily having to remove such modules that are not worn sufficiently to require removal and replacement.

Typically, securing elements used to secure such screen panel modules to a metal substrate support structure have comprised some form of securing pin, often being made of a tough strong moulded polymer material, that is physically hammered manually into its securing position and having some form of interference fit or engagement with the screen panel module and with a securing aperture in the substrate support structure. Generally simple forms of screw threaded nuts connecting to threaded bolts have not been preferred because of the need to access both ends of the bolt when installing and removing same, and further that screw threaded connections tend to loosen and potentially disengage when subjected to the vibrational regime of use of such screening decks.

One known form of such a screen panel module includes a reinforcing metal subframe structure part of which includes a plate strip or at least plate strip sections located adj acent to an intended lower face of the complete screen panel module and positioned adjacent to opposed side edge faces of the complete screen panel module. The reinforcing metal subframe structure then has a polymer material moulded over the subframe structure to produce the complete screen panel module as described herein. The polymer material is a suitable strong tough and hard wearing polymer material such as polyurethane but other polymer materials could be used. The polymer material substantially surrounds and encases the metal subframe structure except for small spaced zones of the above described plate strips or plate strip sections that are positioned in cavities formed inwardly from the respective opposed side edge faces. The exposed spaced zones of the plate strips or plate strip sections each include a bore or a recess forming part of a bore to receive a securing pin passing therethrough and into a bore in the underlying substrate support structure once the securing pin is installed by hammering therethrough. The securing pin would have a head region that, when installed, engages with the exposed zone of the plate strips or plate strip sections and a shank portion configured to provide an interference securing characteristic with the substrate support structure.

While the above-described securing pins work effectively once installed, they do have some practical difficulties with installation and particularly with removal when a screen panel module needs to be replaced. Installation and particularly removal processes involve undesirable difficult, dangerous and physical work for installers/removers, often performed in relatively dirty and confined spaces.

US Patent Specification No 5045184 discloses modular screen panels secured to a metal subframe of a screening deck used in vibrational screening apparatus, whereby magnetic securing means are embedded in a lower surface of an edge zone of the modular screen panel. The magnetic securing means are therefore effectively disposed of if the modular screen panel is worn and requires replacing. US Patent Specification No 9283700 discloses a similar concept of embedded magnetic securing means in the modular screen panel. In both the aforementioned US patent specifications the only restraining force operable between the modular screen panel and the metal sub-frame, is the magnetic attractive forces operable between the magnetic securing means and the metal sub-frame.

### Brief Summary of the Development

An objective of this development is to provide an improved releasable coupling element or elements separate to a screening panel or a screening panel module capable of securing such a screening panel or screening panel module to a metal substrate support structure to form a screening deck for use in vibrational material screening apparatus, whereby the separate releasable coupling element or elements is/are more easily connectable to said screening panel or said screening panel module and to said metal substrate structure, while still permitting a more convenient removal of such a screening panel or an individual screening panel module, when it is required to replace same because of damage or wear thereto.

A still further preferred objective of this development is to provide an improved screening deck assembly including a screening panel member or members releasably coupled to a screening deck support structure having one or more support members by an improved releasable coupling arrangement. The development also aims to provide improved part combinations that can achieve a secure connection of the screening panel member(s) to the support member(s) in operational use of a screening deck but allow a much easier removal of a screening panel member from the support structure when it is desired to do so.

In accordance with a first aspect of this development there is provided a releasable coupling element for operationally holding a screening panel member to a support member that is ferrous based or includes ferrous based support parts to form at least part of a screening deck of a material vibrational screening apparatus, said releasable coupling element being characterised by having a first part with a magnetic first upper zone, whereby said magnetic first upper zone is, in use, releasably held to a first engagement part being or containing a ferrous based part, of said screening panel member, by magnetic attraction, said releasable coupling element having a protuberance with an axial direction depending downwardly from said first part, said protuberance being co-operable, in use, with said support member to mechanically prevent movement of the releasable coupling element relative to said support member laterally to said axial direction.

In a further preferred aspect, the present development provides a releasable coupling element for operationally holding a screening panel member to a support member that is ferrous based or includes ferrous based support parts to form at least part of a screening deck of a material vibrational screening apparatus, said releasable coupling element being characterised by having a first part cooperable, in use, with a said screening panel member and a second part cooperable, in use, with a said support member, said first part having a first zone facing in a first direction, and an opposed second zone facing in a second direction opposite to said first direction, whereby said first zone, in use, is releasably held to a said screening panel member by magnetic attraction forces and said second zone is, in use, releasably held to a said support member by magnetic attraction forces, said releasable coupling element being further characterised by said second part having an axial direction extending downwardly from said second zone, said second part being co-operable with a said support member to mechanically prevent movement of said releasable coupling element relative to said support member laterally relative to said axial direction but to allow selective engagement or disengagement of said second part with a said support member or from a said support member, whereby said screening panel member is, in use, selectably disengagable from a said support member by either or both overcoming any magnetic attraction forces operating to hold a said screening panel member to a releasable coupling element or by overcoming any magnetic attraction forces between said releasable coupling element and the support member.

A releasable coupling element as described in the preceding paragraph is separable from the screening panel member by overcoming any magnetic attractive forces and any potential existing mechanical friction forces or the like that might inhibit such separation. It is preferred that the only removal inhibiting forces that exist are the magnetic attractive forces. Once an installed screening panel member has been used to create sufficient wear or damage to the screening panel member, it is a simple matter to lever or lift upwardly such screening panel member off the releasable coupling element (and other such releasable coupling elements) or lift upwardly the or each said releasable coupling member from the support member(s) to remove same from the screening deck. The releasable coupling element(s) previously holding the removed screening panel member may then remain secured on the ferrous based part forming part of the metal substrate structure or to the support member(s). A similar new or replacement screen panel member can be easily fitted into and releasably held in the space previously occupied by the removed screen panel member with the releasable coupling elements previously used, being reused.

In a further preferred aspect of this development, cooperation between said protuberance and said ferrous based support member does not inhibit movement of said releasable coupling element in the axial direction, i.e. away from the ferrous based support member. Thus, in use, the releasable coupling element holds the screening panel member axially to the ferrous based support member by magnetic attraction and the protuberance prevents any sliding or creep movement of the screening panel member laterally relative to the ferrous based support member.

In one possible preferred embodiment, the first upper attachment zone of the releasable coupling element may be magnetic or may include magnetic section(s). The first upper attachment zone may be formed on said first part of the releasable coupling element and may, in use, face in an upwardly facing direction. The second lower attachment zone of the releasable coupling element may be magnetic or may include magnetic section(s). In one preferred option, the second lower attachment zone may be formed on the first part and may, in use, face in a downward direction, or in a direction generally opposed to that of said first upper attachment zone. In a still further possible preferred option, the protuberance extending downwardly from the first part of the releasable coupling element may be magnetic or may include magnetic sections.

In use, the releasably coupling element may be located in a bore, opening or aperture positioned in an upwardly facing engagement zone of a support substrate having one or more support members carrying one or more screening panel members. Conveniently the aforesaid protuberance of the or each said releasable coupling element locates in and is partially restrained by the bore, opening or aperture.

In a possible alternative preferred embodiment, magnetic means may be operationally positioned in said screening panel member to cooperate with a ferrous based said first part (or ferrous based sections of said first part) of the releasable coupling element when located in a coupling position. A still further possible preferred embodiment might provide magnetic means carried by the support member(s) adjacent a releasable coupling element engagement zone to magnetically releasably engage, in use, with a ferrous based said protuberance, or a ferrous based section or sections of said protuberance of the releasable coupling element.

In a still further possible preferred embodiment, the whole of the first part of the releasable coupling element may be made magnetic. Yet another possible preferred embodiment might provide a releasable a releasable coupling element that is fully magnetic, that is both the first part and the protuberance being magnetic. Alternatively, the protuberance of the releasable coupling element might be made non-magnetic and may be made from any suitable metal or by a polymer material, typically made by a moulding process. The polymer material should have sufficient strength and hard wearing characteristics for the intended purpose, such as polyurethane.

The releasable coupling element may also include a shaft or stud portion extending upwardly from the first part of the releasable coupling element. The upwardly extending shaft or stud portion may be manufactured from a non- magnetic material including metal and/or a polymer material including polyurethane. The polymer material used may be a similar nature to the polymer material based securing pins used to secure screening panel member(s) to a support substrate frame structure in existing screening deck manufacture.

It is further anticipated that this development will also provide a screening panel member supportable, in use, on at least one support member with the or each said support member being ferrous based or at least including spaced ferrous based support parts to form at least part of a screening deck of material vibrational screening apparatus, said screening panel member being characterised by having an upper face, a lower face and at least one ferrous based part, said screening panel member being cooperable with multiple spaced releasable coupling elements, each of said releasable coupling elements being formed as outlined in the preceding text with each said releasable coupling element being releasably held to or within a recess or cavity in a lower face of said screening panel member. In one possible preferred embodiment at least some of the recesses or cavities are positioned adjacent to an edge face of the screening panel member. In another possible preferred embodiment at least some of the recesses or cavities open onto an edge face of the screening panel member. Such recesses or cavities may be configured to partially open on to the edge face and to the lower face of the screening panel member. Preferably, the recesses or cavities may be spaced along at least two opposed said edge faces of said screening panel member, each said recess or said cavity accommodating, in use, a said first upper zone of a said releasable coupling element whereby magnetic access to said ferrous based part is achieved. Conveniently, the ferrous based part is a section of an internal reinforcing structure of said screening panel member generally positioned within a composite structure, said composite structure including a moulded polymer material moulded around the internal reinforcing structure providing said opposed upper and said lower faces of the screening panel member and said side edge regions of the screening panel member.

Preferably, the ferrous based part forming a part of the internal reinforcing structure is either free of the moulded outer cover polymer material of the screening panel member or is covered only by a relatively thin layer of same. The aforesaid ferrous based part, with or without any polymer material covering provides an upper abutment for the releasable coupling element and defines an axial height from its lower surface to the lower surface of the screening panel within which the first part of the releasable coupling element is generally accommodated. The first part of the releasable coupling should have a maximum axial dimension that does not exceed the axial distance from the lower surface of the ferrous based part (with or without polymer covering) to the lower surface of the screening panel, and preferably should approximate this distance.

In accordance with a still further preferred embodiment, the present development might also provide a support substrate for supporting and operationally holding a screening panel thereto to form at least part of a screening deck for use in material vibrational screening apparatus, said support substrate being characterised by said support substrate having one or more support member(s), the or each said support member having spaced upwardly facing engagement zones defining separate coupling locations for engagement with a releasable coupling element, said support substrate being further characterised by a plurality of said releasable coupling elements with a said releasable coupling element cooperating with at least some of said engagement zones, said support substrate being still further characterised by each said releasable coupling element having a first part with a first upper zone and a second lower zone that is releasably held to a said engagement zone by magnetic attraction forces, each said releasable coupling element having a protuberance extending downwardly from said second lower zone and releasably received in a retaining aperture or recess.

Conveniently, the protuberance of the releasable coupling element(s) referred to in the preceding paragraph have an axial direction, the protuberance extending downwardly from the second magnetic lower zone of the first part of the releasable coupling element to be engaged in a retaining aperture located within each said engagement zone of said support substrate. Preferably said first part projects upwardly from said support substrate to fit into a cavity or recess formed in a screening panel member having a ferrous based part to which the magnetic first upper zone of the first part is magnetically attracted to releasably hold the screening panel member thereto. In this position the screening panel member is operationally supported on and held to the support substrate to form either part of or a complete screening deck of material vibrational screening apparatus.

According to yet another preferred aspect, the present development also provides a screening deck for use in material vibrational screening apparatus, said screening deck having a support substrate having one or more support members and at least one screening panel member releasably connected to and supported by a said support member at separate releasable coupling locations, said screening deck being characterised by each said releasable coupling element having a first part and a protuberance with an axial direction, said protuberance extending downwardly from said first part, each said releasable coupling element also having a first attachment zone and a second lower attachment zone whereby, in use, said first upper attachment zone is releasably retained to said screening panel member by magnetic attraction forces and said second lower attachment zone is releasably retained to said support member by magnetic attraction forces, and each said protuberance being physically co-operable with a said support member at a said separate releasable coupling location to mechanically prevent movement of the releasable coupling element relative to said support member laterally to said axial direction.

To fit a screening panel member to a support substrate, releasable coupling elements may be readily positioned in selected or all retaining apertures in the support substrate and a screening panel member or multiple screening panel modules are fitted onto the releasable coupling element first parts that project upwardly therefrom. Alternatively, the releasable coupling elements can be first fitted to the lower face of the screening panel member or screening panel modules with the releasable coupling elements then being fitted into suitable retaining apertures in the support substrate.

To remove a worn screening panel member or screening panel module, the screening panel member or module is simply levered or lifted upwardly to break any magnetic attraction hold down forces and the worn screening panel member or module is lifted out of its operational position. The releasable coupling elements may be left mounted to the support substrate or be carried with the worn securing panel member or module, but in the latter case, can be removed. In either case, the releasable coupling elements may be reused with replacement screening panel members or modules. The first described removal process may be achieved by preferably ensuring that any magnetic attraction forces holding the releasable coupling element to the support member are stronger than any magnetic attraction forces acting to retain the screening panel to the releasable coupling element. In a modular construction of the coupling element of the screening deck, subsequently, adjacent modular screening panel members can also be similarly removed, if required. In this process, the releasable coupling elements may be left in position releasably connected to the support member. If required, the releasable coupling elements can be removed from the screening member by utilising a gripping tool to grip and lift an upwardly extending stud portion or other upwardly extending projecting part.

The screening deck configuration outlined in an earlier paragraph may preferably include additional aspects. For example, the screening deck might include a retainer member that overlies at least part of one or more said screening panel member(s), said retainer member being releasably coupled to the screening panel member(s) by magnetic attraction forces active between said retainer member and at least one or multiple said releasable coupling element(s). The retainer member may be releasably coupled to two or more adjacent said releasable coupling elements. Conveniently, the retainer member may be configured to have a wedge shape, at least in part, to be complementary in shape to a complementary shaped zone extending downwardly from an upwardly facing surface of a screening panel member forming part of the screening deck, said complementary shaped zone providing, in use, access to at least one, and preferably multiple, said releasably coupling elements. Preferably, the complementary shaped zone is positioned along at least a portion of, and preferably fully along, at least one edge face of a respective said screening panel member. More preferably, the complementary shaped zone extends partially or fully along two opposed edge faces of a said screening panel member, and even more preferably along both sets of opposed edge faces of a said screening panel member. In this manner, it is possible to provide a preferred form of screening deck where a retainer member or members overlie adjacent edge faces of at least two adjacent said screening panel members with the wedge shape of the retainer member (or members) wedge fitting into a wedge-like cavity formed between confronting said complementary shaped zones on each of the adjacent edge faces of the screening panel members.

Advantageously, such a said retainer member that is constructed to overlie adjacent edge face regions of adjacently positioned said screening panel members, enables the retainer member or members to inhibit passage of fine screening particulate material between adjacent screening panel edge faces. The retainer member (or members) may be used to act only as a fine particulate material passage inhibitor, or only to releasably retain screening panel member(s) to the support member(s), or to undertake both purposes.

Magnetic attraction forces between the or each of said retainer member(s) may be achieved by making the retainer member(s) from ferrous based material or by including a single ferrous based section or alternatively sections spaced along its length corresponding to an intended operational position of a said releasable coupling element, at least part of which includes magnetic means, the releasable coupling element also including magnetic means cooperable with the support substrate to releasably secure the releasable coupling element to the support substrate. Alternatively, the magnetic attraction forces may be achieved by providing magnetic means on or with said retainer member, cooperable with a ferrous based part of the or each releasable coupling element.

It will, of course, be appreciated that the just described retainer member may, as an alternative, be used primarily as an ingress protection bar or a screening particulate material flow inhibitor with other mechanisms disclosed herein being the primary means of releasably coupling the screening panel member(s) to the support substrate.

Some of the other disclosed means of releasably coupling the screening panel member(s) to the support substrate include providing that the first upper zone is magnetic or includes magnetic sections. Further, the second lower zone might be made magnetic or might include magnetic sections. The second lower zone may be positioned on the first part or might be formed by the protuberance that extends downwardly from the first part of the releasable coupling element(s).

Generally, in this development, any feature or arrangement described in relation to one particular embodiment can be used in relation to any other described embodiment when it is practical and useful to do so. It will be understood that throughout this specification terms such as "screening panel member", "screening deck" and "screening panel module" are used. These terms are intended to cover or include elements that have through flow apertures in any desired sizes and arrays from an upper surface to a lower surface as well as elements that do not have such through flow apertures, the purpose of which is to impact and break up material deposited on such elements. It will further be understood that any terms when used in this specification such as "comprises", "comprising", "includes" and/or "including", are intended to specify the presence of stated features, items, steps, operations, elements, materials, and/or components, but do not preclude the presence of or addition of one or more other features, items, steps, operations, elements, components, materials, and/or groups thereof. Several, non-limiting preferred embodiments will now be described with reference to the accompanying drawings. The disclosure of this specification should also be regarded as including the subject matter disclosed by the drawings and by the claims as annexed.

### Brief Description of the Drawings

Fig 1 is a partial perspective view of an edge region of a screening panel member carried on a support member and secured thereto by a releasable coupling element configured in accordance with this disclosure;
Fig 2 is an edge face elevation view of Fig 1 sectioned through the releasable coupling element;
Figs 3/4 are views similar to Figs 1/2 showing a modified embodiment;
Figs 5/6 are views similar to Figs 1/2 showing a still further modified embodiment.
Fig 7 is a perspective view from below of one possible form of ingress prevention strip intended to prevent or inhibit passage of particulate material between adjacent edges of adjacent screening panel members in a screening deck;
Fig 8 is a perspective view from above of a section of a screening deck utilizing ingress prevention strips of the kind represented in Fig 7;
Fig 9 is a perspective view of one edge region of a screening panel supported on a support structure member by releasable coupling elements as shown in earlier drawings, the edge region being configured to receive an ingress prevention strip as shown in Fig 7; and
Fig 10 is a section view through one releasable coupling element showing the ingress prevention strip illustrated in Figs 7/8 in an installed position.

### Detailed Description of Preferred Embodiments

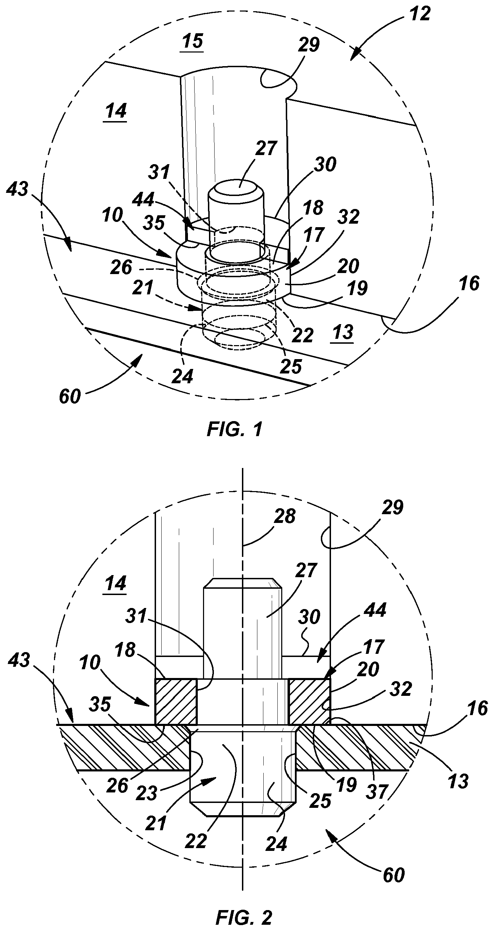

Fig 1 illustrates partially an edge region of a screening panel member 12 shown representatively supported on a supporting rail member 13 to form part of a support substrate 43 of a screening deck 60 of a material vibrational screening machine. Such material vibrational screening machines are used, processing and sizing earth-based materials such as rock and ore materials into desired particle sizes or size ranges. Other comparable applications also exist and the present development relates to all such applications. The panel member 12 is fixed to the supporting rail member 13 by a plurality of spaced releasable coupling elements 10, one of which is illustrated in Figs 1 and 2. The releasable coupling elements 10 would normally be positioned, at least along the illustrated edge face 14 and an opposed edge face (not illustrated), but other positions could also be utilised. The panel member 12 may act as an impact screen and have no through flow screening passages from its upper face 15 to its lower face 16, or it may be a screening type panel member with a plurality of spaced through flow passages from the upper face 15 to the lower face 16 in any desired array and any desired sizes to screen particle material of a particular size range through the panel member 12. Such through flow passages are not illustrated in the drawings.

Screening panel members 12 may take a variety of differing forms and configurations and the present development is intended to be usable in relation to all such forms and configurations. One commonly used screening panel member configuration comprises a plurality of panel member modules 12 placed on supporting rail member 13 in side by side configuration where the modules 12 together form the complete screening deck of the material vibrational screening machine. In this configuration the screening panel modules 12 have edge faces 14 positioned adjacent one another. Such screening panel modules 12 are often produced from a composite material combination including an internal reinforcing metal frame structure with the metal often being ferrous based. The complete outer structure is formed by moulding a tough hard wearing polymer material (such as polyurethane) over the internal metal reinforcing frame structure in any desired configuration. Such panel member modules 12 are effective in use but do wear over time and do need to be replaced from time to time. There is therefore a need for any releasable coupling elements 10 utilised to be effective while the screening panel module 12 is in use but also allow relatively easy removal of the panel module 12 when it is necessary to replace a worn such panel module 12.

Figs 1/2 illustrate one preferred embodiment of a releasable coupling element 10 in accordance with this development. The releasable coupling element 10 includes a first part 17 formed as ring magnet having an upwardly facing surface 18 and downwardly facing surface 19 with a circumferential edge face 20. The first part 17 may be formed as a permanent magnet. A second part 21 may be formed from a non-magnetic material such as a tough, strong, hard wearing polymer material (e.g. polyurethane) and includes a first section 22 engaged or positioned within a central bore 23 of the first part (ring magnet) 17 and a third part 24 acting as a stud member extending downwardly below the first part 17 to be located in a bore 25 located within a location and engagement zone 37 in the supporting rail member 13, the lower surface 19 of the first part 17 being engaged with the engagement zone 37. A circumferential outwardly extending flange formation 26 may be provided at the upper end of the first section 22. An upwardly extending shaft or stud portion 27 may be provided extending from the circumferential flange formation 26 but is not essential and could be omitted if desired.

The downwardly extending second part 21 might be moulded to and secured with the ring magnet 17 such that the second part 21 and the ring magnet 17 are effectively one connected part. Alternatively, they could be formed as separate parts to be assembled as illustrated in the drawings. The third part 24 configured as a rod or stud portion, when engaged in the bore 25, positively prevents the releasable coupling element 10 from moving in a lateral direction relative to its axis 28 but allows movement in the direction of the axis 28 subject to overcoming any magnetic attractive forces applied by the ring magnet 17. Other configurations or shapes for the magnetic 17 might also be employed. Further, when the releasable coupling element 10 is constructed of differing materials such as a moulding polymer material and a metallic magnetic part, mechanical interlocking features between these parts can be utilised to prevent separation of the parts in use.

Figs 1/2 illustrate a configuration where the releasable coupling element 10 is positioned partially in a semi circular cavity 29 formed in the edge face 14 whereby, with a second screening panel member 12 (not illustrated) positioned on the supporting rail member 13, and the second screening panel member 12 having an edge face 14 and similar cavity 29 confronting the illustrated cavity 29, the illustrated releasable coupling element 10 could, at least partially secure, both screening panel members 12 as described hereafter. Alternatively a complete circular bore cavity could be provided completely within an edge zone of a screening panel member 12. The illustrated embodiment, however, has the benefit of minimising the number of releasable coupling elements 10 needed to secure the screening panel members 12 to form a screening deck. As is illustrated in Figs 1/2, a plate 30 is provided with a visible part of the plate 30 being semi-circular, the plate having a central semi-circular recess 31. The plate 30 is spaced upwardly from the lower face 16 of the screening panel member 12 to provide a cavity 32 below the plate 30 accommodating, in use, the thickness of the ring magnet 17. Conveniently, the plate 30 may be formed as part of an internal reinforcing metal frame structure 44 (not all of which is shown) and may be free of any polymer material covering or may include some covering of such material such that sufficient magnetic attractive forces are not obstructed. As is illustrated in Figs 1/2, if the upwardly extending shaft or stud portion 27 is provided, it may be accommodated in the bore formed by the semi-circular cavities 31 in the plates 30. The stud portion 27 also allows the releasable coupling element 10 to be gripped, conveniently by a gripping tool, for ease of insertion of the releasable coupling element into an installation location in a support member 13 or to allow removal of same from such as installation location.

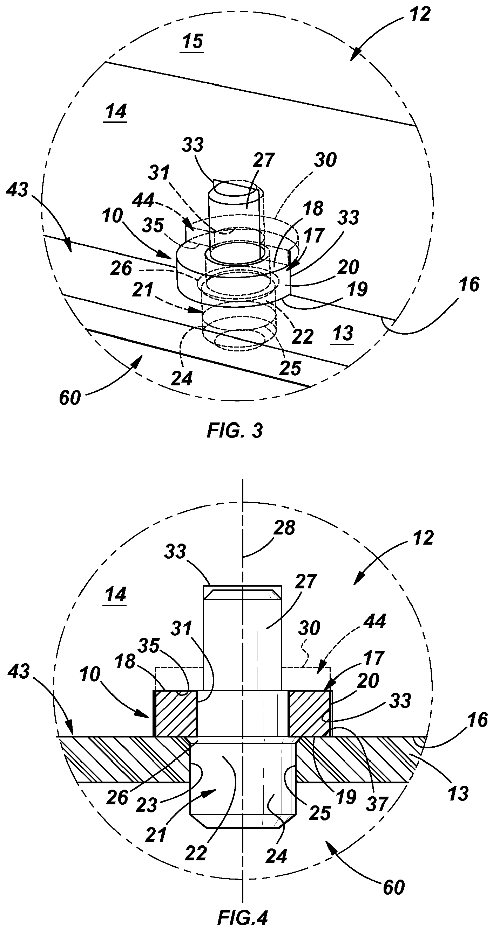

Figs 3/4 illustrate an alternative embodiment to Figs 1/2 where like features have been given the same reference numbers. In Figs 3/4 the releasable coupling element 10 is substantially the same but the semi-circular cavity 29 is reduced in size to provide a space 33 equivalent to immediately surround only half of the releasable coupling element 10, i.e. half of the stud portion 27 and half of the magnetic first part 17. Of course, if the stud portion 27 is not used, then the upper portion of this space 33 surrounding the stud portion 27 would not be required. The drawings illustrate that the ferrous based metal part 30 is directly exposed to the magnetic first part 17 but it is expected that the releasable coupling element 10 would still be effective if the part 30 has some level polymer material cover.

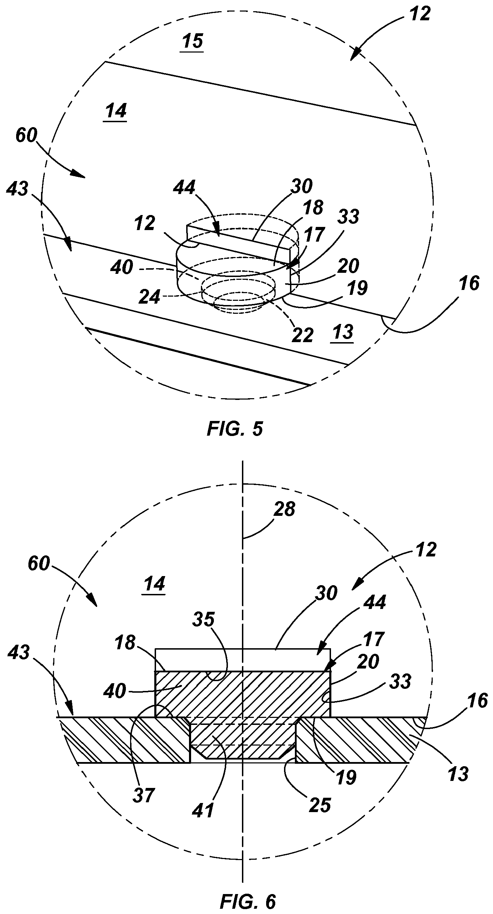

Figs 5/6 illustrate a still further possible preferred embodiment in accordance with the present development. In this embodiment, the releasable coupling element 10 is formed by a single piece permanently magnetic part formed by an upper disc like section 40 dimensioned to provide a sliding fit into the cavity 33 that partially opens onto the lower face 16 of the panel member 12 and in the illustrated embodiment at least, through the edge face 14. Of course the cavity 33 could be fully within molded polymer material forming the outer surfaces of the panel member 12 and would then open only through the lower face 16. The upper surface 18 of the releasable coupling element 10 is then attracted magnetically to the plate 30 to be held, in use, thereto. The lower surface 16 of the of the disc-like section 40, in use, is attracted to and held to the supporting rail member 13 by magnetic forces. The releasable coupling element 10 further includes a protuberance or stud like downwardly projecting part 41 that engages in the bore or hole 25 in the supporting rail member 13, the protuberance or stud 41 being, in this embodiment, an integral part of the releasable coupling element 10. The protuberance or stud 41 may of course have a length to extend fully through the retaining bore or hole 25.

While the drawings illustrate the magnetic ring part 17 and the disc like section 40 may have substantially flat upper and lower surfaces 18, 19 and a circular outer edge face 20, other shapes and configurations are possible provided that sufficient magnetic attractive forces are achievable to operationally hold the plate 30 forming part of the panel member 12 to the supporting rail member 13 while allowing relatively easy detachment of either the plate 30 from the magnetic ring part 17 or the magnetic ring part 17 from the supporting rail member 13 when it is desired to remove a selected panel member 12. This is achievable by using a lever tool to lift the desired panel member 12 relative to the supporting rail member 13 generally in the direction of the axis 28.

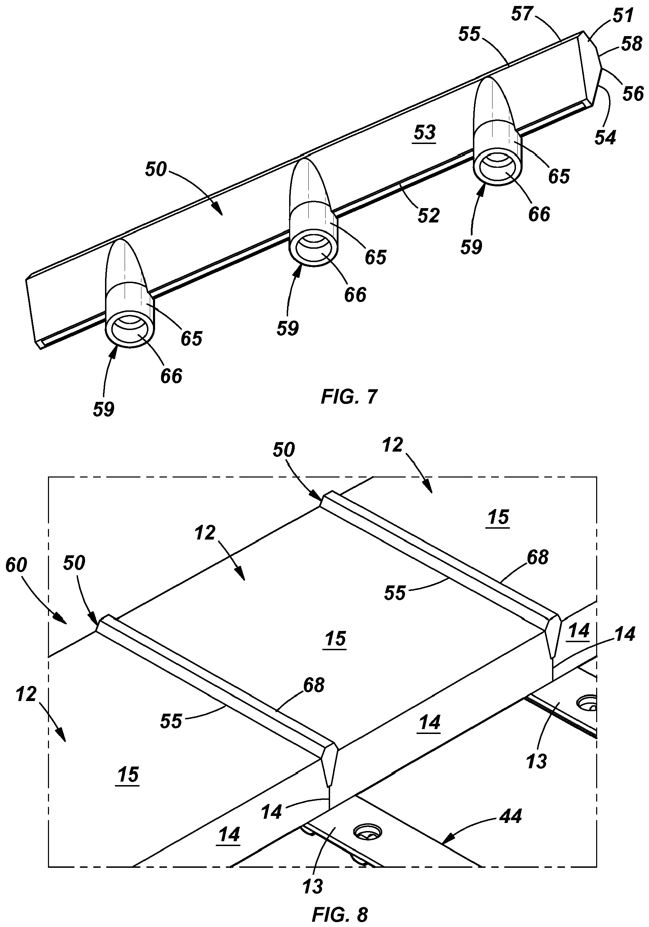

Figs 7 to 10 illustrate still further preferred embodiments of the present development. Fig 7 represents, in perspective view from below, a retainer member or ingress protection bar 50 that, in one preferred structure, has an elongated shape having a length equal to that of a side edge face 14 of a screening panel member 12. It will be seen by those skilled in this art that other configurations are possible. The main cross sectional shape of the ingress protection bar 50 is uniform along its length with a flat upper surface 51 and a similar but narrower flat lower surface 52. Main diverging side faces 53 and 54 extend upwardly from the lower surface 52 to mid location edges 55, 56, where shorter (in height) converging side faces 57, 58 extend further upwardly to the flat upper surfaces 51. Spaced along the ingress protection bar 50 are connection location zones 59 adapted, in use, to cooperate with releasable coupling elements 10 utilised to releasably couple a screening panel member or members 12 to a support substrate 43 including support members 13. The main diverging side faces 53/54 of the retainer member or ingress protection bar 50 provide a uniform wedge-shaped cross section along its length except for the connection location zones 59. The connection location zones 59 are further described below.

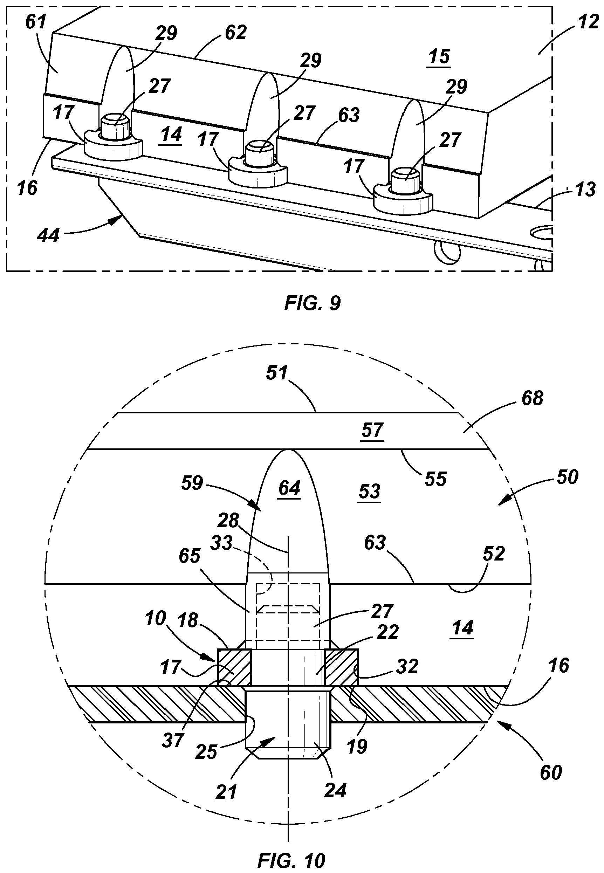

Fig 8 represents part of a screening deck 60 in a perspective view from above having several screening panel members 12 supported on and releasably coupled to support members 13 forming part of a support substrate 43. The screening panel members 12 are positioned with adjacent edge faces 14 in contact with one another. Fig 9 represents one edge face 14 of a screening panel member 12 having its adjacent edge zone supported on a support member 13 and potentially secured thereto by releasable coupling elements 10 spaced along the edge face 14. Three such releasable coupling elements 10 are shown, however, the number might be variable depending on the length of the edge face 14, i.e. the physical size of the screening panel member 12. In Fig 8, through flow screening apertures are not illustrated from the upper surface 15 to the lower surface 16, however, those may or may not be provided depending on the intended function of the screening panel members 12. The releasable coupling elements 10 illustrated in Fig 9 are similar to those illustrated in Figs 1/2 and like features have been given the same reference numbers as those used in Figs 1/2. It will of course be appreciated that other disclosed embodiments of releasable coupling elements 10 could be utilised with appropriate design changes to cooperating parts of the assembly.

As illustrated in Fig 9, the edge face 14 has an upper section shaped to provide an outwardly angled surface 61 from an edge 62 in the upper surface 15 of the screening panel member 12, the angled surfaced 61 leading to a narrow ledge 63 part way between the upper surface 15 and the lower surface 16 of the screening panel member 12. The angle of the surface 61 is complementary to the angle of the surfaces 53/54 of the ingress protection bar 50. In consequence, the wedge-shaped lower zone formed by surfaces 53/43 of the retainer member and/or ingress protection bar 50 wedges neatly into the wedge-shaped gap formed between surfaces 61 of adjacent screening panel members 12 when installed onto a support subframe 44 of a screening deck 60 as shown in Fig 8. As can be seen in Figs 7 and 10, each connection location zones 59 has an enlarged portion 64 projecting from the surface 61 with the portion 64 having an outer surface that forms part of a cylindrical shape whereby it constitutes a complementary fit with the part cylindrical recesses 29 in the edge face 14 of the screening panels 12. At the lower end of projecting portion 64, a cylindrical retaining collar 65 with an inner bore 66 is provided, extending downwardly below the lower narrow flat face 52 of the ingress protection bar 50. The cylindrical retaining collar 65 has a downwardly directed open face 67.

In the installed position of the ingress protection bar 50 shown in Fig 8 and partially in Fig 10, the enlarged portion 64 and collar 65, at least, a sliding fit in the bore created by confronting recess surfaces 29 of adjacent edge faces 14 of adjacent screening panel members 12. The bore 66 of the retaining collar 65 fits over and locates on the upwardly projecting stud 27 of the releasable coupling element 10 whereby the collar 65 and thereby the retainer member 50 is physically restricted in lateral movement relative to the axis 28 of the releasable coupling element 10 but relative movement is not restricted in the direction of axis 28.

In one preferred construction format, the retainer member 50 may include an internal reinforcing bar extending substantially the length of the member 50 made from steel with the respective collars 65 being short pipe or similar sections also made of steel welded to the internal reinforcing bar with preferably at least lower ends of same providing magnetic force access to the respective releasable coupling elements 10. The outer shape of the retainer member 50 may be formed by moulding a strong hard wearing polymer material (e.g. polyurethane) to the reinforcing bar and at least upper parts of the short pipe sections forming the collars 65. The upper end zone of the stud 27 may include a frustoconical tapered zone as a lead in region to assist locating the collars 65 over the studs 27. The retainer member in ingress protection bars 50 may be seen as part of a respective said screening panel member 12 in the same way as an internal reinforcing structure or other structural part is part of a screening panel member 12.

The retaining member or ingress protection bars 50 are shown in the drawings as being particularly preferred in a location adjacent confronting edge faces 14 adjoining screening panel members 12 and further, may have upwardly extending bar formations 68 (above the upper faces 15 of the screening panel members 12) that may assist with processing of treatment materials on the screening deck 60 including directing of such treatment materials towards screening apertures. The upwardly extending bar formations 68 are, however, a preferred feature for some applications but may not be required in all applications. Further, it is conceivably possible for a retainer member 50 to be positioned otherwise than at edge faces 14.

The ingress protection members 50, if it is acting purely as a protection against ingress of particulate material, may be held in an installed operational position (Figs 8/10), by any suitable means. One such means is, however, as outlined in the preceding where it is held by magnetic forces from a magnetic part of the respective releasable coupling elements 10. Another method might be to include magnetic means in the member 50 itself cooperable with a structural part of the screening panel members 12, for example part of the reinforcing structure of the screening panel member 12. If, however the member 50 is to solely provide or contribute to releasably retaining the or each screening panel member 12 to the support substrate 43, the magnetic attractive forces should be effective operable between the member 50 and some or all of the releasable coupling elements 10.

Various modifications to the embodiments disclosed in the annexed drawings will be readily apparent to those skilled in this art and are also intended to be encompassed by this disclosure provided such modifications fall within the scope of the accompanying claims.

## Claims

1. A screening deck (60) for use in material vibrational screening apparatus, said screening deck (60) having a support substrate (43) having one or more support members (13) and at least one screening panel member (12) releasably connected to and supported by a said support member (13) at separate releasable coupling locations (37), said screening deck (60) being **characterised by** each releasable coupling element (10) having a first part (17) and a protuberance (21, 24, 41) with an axial direction (28), said protuberance (21, 24, 41) extending downwardly from said first part (17), each said releasable coupling element (10) also having a first upper attachment zone (18) and a second lower attachment zone (19) whereby, in use, said first upper attachment zone (18) is releasably retained to said screening panel member (12) only by magnetic attraction forces and said second lower attachment zone (19) is releasably retained to said support member (13) by magnetic attraction forces, and each said protuberance (21, 24, 41) being physically co-operable with a said support member (13) at a said separate releasable coupling location (37) to mechanically prevent movement of the releasable coupling element (10) relative to said support member (13) laterally to said axial direction (28).

2. A screening deck (60) according to claim 1, **characterised in that** physical cooperation between said protuberance (21, 24, 41) and a said support member (13) does not inhibit movement of said releasable coupling element (10) in said axial direction (28).

3. A screening deck (60) according to claim 1 or claim 2 **characterised in that** the first upper attachment zone (18) of each said releasable coupling element (10) is magnetic or includes magnetic section(s).

4. A screening deck (60) according to any one of claims 1 to 3 **characterised in that** said second lower attachment zone (19) of each said releasable coupling element (10) is magnetic or includes magnetic sections.

5. A screening deck (60) according to claim 4 **characterised in that** said second lower attachment zone (19) of each said releasable coupling element (10) is positioned on said first part (17).

6. A screening deck (60) according to any one of claims 1 to 5 **characterised in that** the protuberance (21, 24, 41) of each said releasable coupling element (10) is magnetic or includes magnetic sections.

7. A screening deck (60) according to claim 1 or claim 2, wherein all of each said releasable coupling element (10) is magnetic.

8. A screening deck (60) according to claim 1 or claim 2, **characterised in that** said protuberance (21, 24) is a rod or stud member (21, 24) and is moulded from a polymer material that engages in an opening (25) formed in a said releasable coupling location (37).

9. A screening deck (60) according to any one of claims 1 to 8, **characterised in that** a non-magnetic material shaft or stud portion (27) extends upwardly from said first part (17).

10. A screening deck (60) according to claim 1 **characterised in that** a retainer member (50) overlies at least part of one or more said screening panel member(s) (12), said retainer member (50) being releasably coupled to the screening panel member(s) (12) by magnetic attraction forces active between said retainer member (50) and at least one or multiple said releasable coupling element(s) (10).

11. A screening deck (60) according to claim 11 **characterised in that** said retainer member (50) is releasably coupled to two or more adjacent said releasable coupling element(s) (10) by said magnetic attraction forces.

12. A screening deck according to claim 11 or claim 12 **characterised in that** a said retainer member (50) is positioned overlying adjacent edge face regions (14) of adjacently positioned said screening panel member(s) (12), whereby said retainer member (50) inhibits passage of screening particulate material through spaces between the adjacent edge face regions (14).

13. A releasable coupling element (10) for operationally holding a screening panel member (12) to a support member (13) that is ferrous based or includes ferrous based support parts to form at least part of a screening deck (60) of a material vibrational screening apparatus, said releasable coupling element (10) being **characterised by** having a first part (17) cooperable, in use, with a said screening panel member (12) and a second part (21, 41) cooperable, in use, with a said support member (13), said first part (17) having a first zone (18) facing in a first direction, and an opposed second zone (19) facing in a second direction opposite to said first direction, whereby said first zone (18), in use, is releasably held to a said screening panel member (12) only by magnetic attraction forces and said second zone (19) is, in use, releasably held to a said support member (13) only by magnetic attraction forces, said releasable coupling element (10) being further **characterised by** said second part (21, 41) having an axial direction (28) extending downwardly from said second zone (19), said second part (21, 41) being co-operable with a said support member (13) to mechanically prevent movement of said releasable coupling element (10) relative to said support member (13) laterally relative to said axial direction (28) but to allow selective engagement or disengagement of said second part (21, 41) with a said support member (13) or from a said support member (13), whereby said screening panel member (12) is, in use, selectably disengagable from a said support member (13) by either or both overcoming any magnetic attraction forces operating to hold a said screening panel member (12) to a releasable coupling element (10) screening or by overcoming any magnetic attraction forces between said releasable coupling element (10) and the support member (13).

14. A releasable coupling element (10) according to claim 13 **characterised in that** the first upper attachment zone (18) of said releasable coupling element (10) is magnetic or includes magnetic section(s).

15. A releasable coupling element (10) according to claim 14 **characterised in that** the second lower attachment zone (19) of said releasable coupling element (10) is magnetic or includes magnetic section(s).
